# EUROPEAN PATENT APPLICATION

(11) **EP 4 667 618 A1**
(43) Date of publication of application: **24.12.2025**
(21) Application number: 23922941.2
(22) Date of filing: 20.12.2023
(51) Int. Cl.: C23C 22/00, C21D 8/12, C21D 9/46, C22C 38/00, C22C 38/60, C23C 22/40, C23C 22/42, C23C 22/44, C23C 22/74, C23C 28/04, H01F 1/147

(54) **GRAIN-OFIENTED ELECTRICAL STEEL SHEET, AND METHOD FOR FORMING INTERMEDIATE LAYER AND INSULATING COATING FILM OF GRAIN-OFIENTED ELECTRICAL STEEL SHEET**

(30) Priority: 13.02.2023 JP 2023019767
(71) Applicant: NIPPON STEEL CORPORATION, Chiyoda-ku Tokyo 100-8071 (JP)
(72) Inventor: TAKEDA Kazutoshi, Tokyo 100-8071 (JP); TAKATANI Shinsuke, Tokyo 100-8071 (JP); KATAOKA Takashi, Tokyo 100-8071 (JP); KOGAKURA Yuuki, Tokyo 100-8071 (JP)
(74) Representative: Vossius & Partner Patentanwälte Rechtsanwälte mbB
(86) International application number: PCT/JP2023/045617
(87) International publication number: WO 2024/171608

(57) **Abstract**

Disclosed are: a grain-oriented electrical steel sheet including: a base steel sheet; an intermediate layer disposed on a surface of the base steel sheet; and an insulating coating disposed on a surface of the intermediate layer, wherein the intermediate layer has an average thickness of 20 to 200 nm, includes one or two or more selected from a group consisting of V, Mo, W, and Zr, and includes one or two or more selected from a group consisting of phosphorus; fluorine; and nitrogen and oxygen; and a method for forming the intermediate layer and the insulating coating included in the grain-oriented electrical steel sheet.

## Description

### TECHNICAL FIELD

The present invention relates to a grain-oriented electrical steel sheet, and a method for forming the intermediate layer and the insulating coating included in the grain-oriented electrical steel sheet.

Priority is claimed on Japanese Patent Application No. 2023-019767, filed February 13, 2023, the content of which is incorporated herein by reference.

### BACKGROUND ART

A grain-oriented electrical steel sheet is mainly used for a transformer. The transformer is continuously magnetized for a long period of time from installation to disposal and continues to generate energy loss. Therefore, energy loss when the transformer is magnetized by alternating current, that is, iron loss is a main index for determining performance of the transformer.

In order to reduce iron loss of the grain-oriented electrical steel sheet, many techniques have been developed so far from a viewpoint of (a) increasing development in the {110}<001> orientation (Goss orientation), (b) increasing the content of a solid solution element such as Si to increase electric resistance of the steel sheet, or (c) reducing the sheet thickness of the electrical steel sheet.

In addition, applying tension to the steel sheet is effective for reducing iron loss. It is an effective means for reducing iron loss to form a coating made of a material having a thermal expansion coefficient smaller than that of the steel sheet on a sheet surface at a high temperature. A forsterite film (inorganic coating) having excellent coating adhesion, generated by a reaction between an oxide on a sheet surface and an annealing separator in a final annealing step of a grain-oriented electrical steel sheet, is a coating capable of applying tension to the steel sheet.

For example, a method for forming an insulating coating by baking a coating liquid mainly containing colloidal silica and a phosphate on a sheet surface, disclosed in Patent Document 1, is an effective method for reducing iron loss because the method has a large effect of applying tension to the steel sheet. Therefore, a general manufacturing method of a grain-oriented electrical steel sheet is to leave the forsterite film generated in the final annealing step and to form an insulating coating mainly containing a phosphate on the forsterite film.

However, in recent years, there has been an increasing demand for miniaturization and high performance of a transformer, and in order to miniaturize the transformer, a grain-oriented electrical steel sheet is required to have excellent high magnetic field iron loss such that iron loss is favorable even when magnetic flux density is high. At the same time, in recent years, it has been clarified that the forsterite film hinders movement of a domain wall and adversely affects iron loss.

In a grain-oriented electrical steel sheet, a magnetic domain changes by movement of a domain wall under an alternating magnetic field. Smooth and rapid movement of the domain wall is effective for reducing iron loss, but the forsterite film itself is a non-magnetic body and has an uneven structure at a steel sheet/coating interface, and this uneven structure hinders movement of the domain wall. Therefore, it is considered that the forsterite film adversely affects iron loss.

Therefore, as a means for improving high magnetic field iron loss, a technique for manufacturing a grain-oriented electrical steel sheet having no forsterite film, or a technique for bringing a sheet surface into a mirror surface state (in other words, a technique for magnetically smoothing a sheet surface) have been studied by: removing a forsterite film by using a mechanical means such as polishing or a chemical means such as pickling; or preventing generation of a forsterite film in high-temperature final annealing.

As a technique for preventing generation of a forsterite film, for example, Patent Document 2 discloses a technique in which a surface-formed product is removed by pickling after normal final annealing, and then the sheet surface is brought into a mirror surface state by chemical polishing or electrolytic polishing. It has been found that a better iron loss improving effect can be obtained by forming a tension insulating coating on the surface of a grain-oriented electrical steel sheet without a forsterite film, obtained by such a known method. In addition, the tension insulating coating can impart various properties such as corrosion resistance, heat resistance, and slippage in addition to improvement of iron loss.

However, the forsterite film has an effect of exhibiting insulation properties and an effect as an intermediate layer for ensuring coating adhesion when a tension coating (tension insulating coating) is formed. That is, since the forsterite film is formed in a state of deeply entering the steel sheet, the forsterite film is excellent in adhesion to the steel sheet, which is metal. Therefore, when a tension insulating coating containing colloidal silica, a phosphate, or the like as a main component is formed on the surface of the forsterite film, coating adhesion is excellent. On the other hand, in general, it is difficult to bond metal and oxide. Therefore, when the forsterite film is not present, it has been difficult to ensure sufficient coating adhesion between an insulating coating and sheet surface.

Therefore, in a case where a tension insulating coating is formed on a grain-oriented electrical steel sheet having no forsterite film, it has been studied to form a layer that alternatively plays a role as an intermediate layer of the forsterite film.

For example, Patent Document 3 discloses a technique in which a grain-oriented electrical steel sheet having no forsterite film is annealed in a weakly reducing atmosphere, and silicon inevitably contained in a silicon steel sheet is thermally oxidized selectively to form a SiO₂ layer on the sheet surface, and then a tension-applying type insulating coating is formed.

Patent Document 4 discloses a technique in which a grain-oriented electrical steel sheet having no forsterite film is subjected to an anodic electrolytic treatment in a silicate aqueous solution to form a SiO₂ layer on the sheet surface, and then a tension-applying type insulating coating is formed.

Patent Document 5 discloses a technique for ensuring adhesion of a tension insulating coating by forming a coating that serves as an intermediate layer in advance when a tension-applying coating is formed.

Patent Document 6 discloses a grain-oriented electrical steel sheet including a base steel sheet and a tension insulating coating, in which the tension insulating coating is present on the surface of the grain-oriented electrical steel sheet, and an iron oxide layer having a thickness of 100 to 500 nm is present between the base steel sheet and the tension insulating coating.

### Citation List

### Patent Documents

Patent Document 1: Japanese Unexamined Patent Application, First Publication No. S48-039338
Patent Document 2: Japanese Unexamined Patent Application, First Publication No. S49-96920
Patent Document 3: Japanese Unexamined Patent Application, First Publication No. H6-184762
Patent Document 4: Japanese Unexamined Patent Application, First Publication No. H11-209891
Patent Document 5: Japanese Unexamined Patent Application, First Publication No. H5-279747
Patent Document 6: Japanese Unexamined Patent Application, First Publication No. 2020-111814

### SUMMARY OF INVENTION

### Technical Problem

However, in the technique disclosed in Patent Document 3, it is necessary to prepare an annealing facility capable of controlling an atmosphere in order to perform annealing in a weakly reducing atmosphere, and there is a problem in treatment cost.

In the technique disclosed in Patent Document 4, it is necessary to prepare a new electrolysis treatment facility in order to obtain a SiO₂ layer that maintains sufficient coating adhesion to a tension-applying type insulating coating on a sheet surface by performing an anodic electrolytic treatment in a silicate aqueous solution, and there is a problem in treatment cost.

In the technique disclosed in Patent Document 5, there is a problem that a tension insulating coating having a large tension cannot be held with good adhesion.

In the technique disclosed in Patent Document 6, in order to form an iron oxide layer, a grain-oriented electrical steel sheet after surface treatment is heat-treated at a steel sheet temperature of 700 to 900°C for 5 to 60 seconds in an atmosphere having an oxygen concentration of 1 to 21 vol% and a dew point of -20 to 30°C. Therefore, in a case where a steel sheet having a forsterite film is manufactured in the same line, it is necessary to change the atmosphere of an annealing furnace, and workability is poor.

As described above, it has been difficult to provide a grain-oriented electrical steel sheet that has no forsterite film, is excellent in coating adhesion, has a high coating tension, and is excellent in magnetic properties on the premise of a method that does not deteriorate facility restrictions and workability.

In addition, in order that a grain-oriented electrical steel sheet having no forsterite film ensures coating adhesion (adhesion between the base steel sheet and an insulating coating), there is a method for forming an intermediate layer containing a crystalline metal phosphate between the base steel sheet and the insulating coating. According to the method, coating adhesion can be secured. However, it is necessary for the method to increase the thickness of the intermediate layer. Therefore, there is room for improvement in terms of increasing the space factor when grain-oriented electrical steel sheets are laminated to form a laminated iron core.

Therefore, an object of the present invention is to provide a grain-oriented electrical steel sheet that has no forsterite film, is excellent in coating adhesion, coating tension, and magnetic properties, and can be increased in space factor when a laminated iron core is formed. In addition, an object of the present invention is to provide a grain-oriented electrical steel sheet having the above properties and having an excellent elution property and corrosion resistance, each of which is a characteristic generally required for a grain-oriented electrical steel sheet.

Further, an object of the present invention is to provide a method for forming the intermediate layer and the insulating coating included in the grain-oriented electrical steel sheet.

### Solution to Problem

The present inventors have studied the above problems. As a result, the present inventors have found that the above problems can be solved when a grain-oriented electrical steel sheet having no forsterite film has an intermediate layer including one or two or more selected from a group consisting of V, Mo, W, and Zr between the base steel sheet and the insulating coating.

The present invention has been made on the basis of the above-described findings. The gist of the present invention is as follows.
[1] A grain-oriented electrical steel sheet including:
   a base steel sheet;
   an intermediate layer disposed on a surface of the base steel sheet; and
   an insulating coating disposed on a surface of the intermediate layer,
   wherein the intermediate layer has an average thickness of 20 to 200 nm, includes one or two or more selected from a group consisting of V, Mo, W, and Zr, and includes one or two or more selected from a group consisting of phosphorus, fluorine, and nitrogen and oxygen.
[2] In the grain-oriented electrical steel sheet according to [1], the intermediate layer may include one or two or more selected from a group consisting of vanadic acid, vanadium oxide, molybdic acid, phosphomolybdic acid, molybdenum oxide, tungstic acid, phosphotungstic acid, tungsten oxide, zirconic acid, and zirconium oxide.
[3] In the grain-oriented electrical steel sheet according to [1] or [2], the intermediate layer may include one or two or more selected from a group consisting of Na, K, and Li.
[4] A method for forming the intermediate layer and the insulating coating included in the grain-oriented electrical steel sheet according to [1], the method including:
   a final annealing step of applying an annealing separator containing 10 to 100 mass% of Al₂O₃ to a steel sheet, drying the steel sheet, and then performing final annealing;
   an annealing separator removing step of removing an excess of the annealing separator from the steel sheet after the final annealing step;
   an immersion step of immersing the steel sheet after the annealing separator removing step in a chemical treatment solution having a liquid temperature of 30°C to 60°C, and including one or two or more metal elements selected from a group consisting of V, Mo, W, and Zr, the metal element included in a concentration of 0.01 to 2.00 atom%, for 5 to 90 seconds;
   a drying step of pulling up the steel sheet after the immersion step from the chemical treatment solution, removing an excess of the chemical treatment solution, and then drying the steel sheet; and
   an insulating coating forming step of applying, to the steel sheet after the drying step, a coating liquid containing a phosphate and colloidal silica such that the colloidal silica is contained in an amount of 30 to 150 parts by mass with respect to 100 parts by mass of the phosphate, drying the steel sheet, and then holding the steel sheet at a sheet temperature of 750°C to 900°C for 10 to 50 seconds.

### Advantageous Effects of Invention

According to the embodiments of the present invention, it is possible to provide a grain-oriented electrical steel sheet that has no forsterite film, is excellent in coating adhesion, coating tension, elution property, corrosion resistance, and magnetic properties, and can be increased in space factor when a laminated iron core is formed.

In addition, according to the above embodiments of the present invention, it is possible to provide a method for forming the intermediate layer and the insulating coating included in the grain-oriented electrical steel sheet.

### BRIEF DESCRIPTION OF DRAWINGS

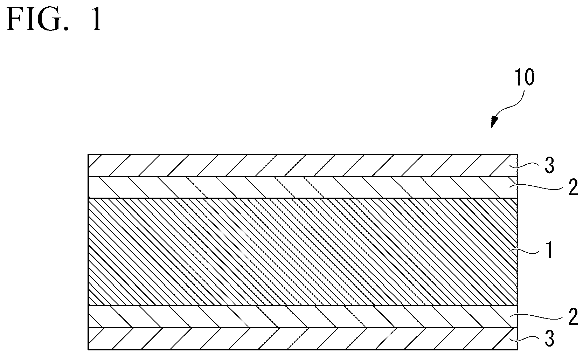

[FIG. 1] An example of a cross-sectional view of a grain-oriented electrical steel sheet according to the embodiment.

### DESCRIPTION OF EMBODIMENTS

The grain-oriented electrical steel sheet according to an embodiment of the present invention (grain-oriented electrical steel sheet according to the embodiment) and the manufacturing method of the grain-oriented electrical steel sheet according to the embodiment, including the method for forming the intermediate layer and the insulating coating included in the grain-oriented electrical steel sheet according to the embodiment, will be described.

First, the grain-oriented electrical steel sheet according to the embodiment will be described.

As illustrated in FIG. 1, a grain-oriented electrical steel sheet 10 of the embodiment includes: a base steel sheet 1; an intermediate layer 2 disposed on a surface of the base steel sheet 1; and an insulating coating 3 disposed on a surface of the intermediate layer 2. Further, the grain-oriented electrical steel sheet 10 has substantially no forsterite film on the surface of the base steel sheet 1. In the embodiment, having substantially no forsterite film means that the adhesion amount of a forsterite film is less than 2 g/m² on one surface of the base steel sheet 1.

In the following description, reference numerals of the drawings may be omitted.

### <Base Steel Sheet>

### (Chemical Composition)

The grain-oriented electrical steel sheet 10 according to the embodiment has a significant feature in the intermediate layer 2 formed on the surface of the base steel sheet 1. The chemical composition of the base steel sheet 1 included in the grain-oriented electrical steel sheet 10 is not limited, and may be in a known range. In a case of obtaining properties generally required for a grain-oriented electrical steel sheet, the base steel sheet 1 preferably includes the following chemical composition.

The base steel sheet 1 may include, as a chemical composition, in terms of mass%:
C: 0.010% or less,
Si: 2.50 to 4.00%,
Mn: 0.01 to 0.50%,
N: 0.010% or less,
sol. Al: 0.020% or less,
S: 0.010% or less,
Sn: 0 to 0.50%,
Cu: 0 to 0.50%,
Se: 0 to 0.020%,
Sb: 0 to 0.50%, and
a remainder of Fe and impurities.

In the embodiment, % relating to the chemical composition is mass% unless otherwise specified. In a range of numerical value limitation described below with "to" interposed therebetween, the lower limit value and the upper limit value are included in the range. A numerical value indicated as "less than" or "more than" is not included in the numerical range.

Hereinafter, each element will be described.

### C: 0.010% or less

C (carbon) is an element effective in controlling the microstructure of the steel sheet in steps up to completion of the decarburization annealing step in the manufacturing process. However, when the C content exceeds 0.010%, the magnetic properties of the grain-oriented electrical steel sheet, which is a product sheet, are deteriorated. Therefore, in the base steel sheet of the grain-oriented electrical steel sheet according to the embodiment, the C content is preferably 0.010% or less. The C content is more preferably 0.005% or less.

The C content is preferably as low as possible. Even when the C content is reduced to less than 0.0001%, the microstructure control effect is saturated, and manufacturing cost is merely increased. Therefore, the C content may be 0.0001% or more.

### Si: 2.50 to 4.00%

Si (silicon) is an element that increases the electric resistance of a grain-oriented electrical steel sheet and improves iron loss properties. When the Si content is less than 2.50%, a sufficient eddy-current loss reducing effect cannot be obtained. Therefore, the Si content is preferably 2.50% or more. The Si content is more preferably 2.70% or more, and still more preferably 3.00% or more.

On the other hand, when the Si content exceeds 4.00%, the grain-oriented electrical steel sheet is embrittled, and passability is significantly deteriorated. In addition, workability of the grain-oriented electrical steel sheet is deteriorated, and the steel sheet is likely to be fractured during rolling. Therefore, the Si content is preferably 4.00% or less. The Si content is more preferably 3.80% or less, and still more preferably 3.70% or less.

### Mn: 0.01 to 0.50%

Mn (manganese) is an element that is bonded to S in a manufacturing process to form MnS. This precipitate functions as an inhibitor (inhibitor of normal grain growth) and causes secondary recrystallization in steel. Mn is also an element that enhances hot workability of steel. When the Mn content is less than 0.01%, the above effect cannot be sufficiently obtained. Therefore, the Mn content is preferably 0.01% or more. The Mn content is more preferably 0.02% or more.

On the other hand, when the Mn content exceeds 0.50%, secondary recrystallization does not occur, and the magnetic properties of steel are deteriorated. Therefore, in the base steel sheet of the grain-oriented electrical steel sheet according to the embodiment, the Mn content is preferably 0.50% or less. The Mn content is more preferably 0.20% or less, and still more preferably 0.10% or less.

### N: 0.010% or less

N (nitrogen) is an element that is bonded to Al in the manufacturing process to form AlN that functions as an inhibitor. However, when the N content is more than 0.010%, the inhibitor excessively remains in the grain-oriented electrical steel sheet, and the magnetic properties are deteriorated. Therefore, in the base steel sheet of the grain-oriented electrical steel sheet according to the embodiment, the N content is preferably 0.010% or less. The N content is more preferably 0.008% or less.

On the other hand, the lower limit value of the N content is not particularly limited, but even when the N content is reduced to less than 0.001%, manufacturing cost is merely increased. Therefore, the N content may be 0.001% or more.

### Sol. Al: 0.020% or less

Sol. Al (acid-soluble aluminum) is an element that is bonded to N in the manufacturing process of the grain-oriented electrical steel sheet to form AlN that functions as an inhibitor. However, when the sol. Al content in the base steel sheet exceeds 0.020%, the inhibitor excessively remains in the base steel sheet to deteriorate magnetic properties. Therefore, in the base steel sheet of the grain-oriented electrical steel sheet according to the embodiment, the sol. Al content is preferably 0.020% or less. The sol. Al content is more preferably 0.010% or less, and still more preferably less than 0.001%.

The lower limit value of the sol. Al content is not particularly limited, but even when the content is reduced to less than 0.0001 %, manufacturing cost is merely increased. Therefore, the sol. Al content may be 0.0001% or more.

### S: 0.010% or less

S (sulfur) is an element that is bonded to Mn in the manufacturing process to form MnS that functions as an inhibitor. However, when the S content exceeds 0.010%, the remaining inhibitor deteriorates magnetic properties. Therefore, in the base steel sheet of the grain-oriented electrical steel sheet according to the embodiment, the S content is preferably 0.010% or less. The S content is more preferably as low as possible. For example, the S content is less than 0.001%. However, even when the S content is reduced to less than 0.0001%, manufacturing cost is merely increased. Therefore, the S content may be 0.0001% or more.

### Remainder: Fe and impurities

The chemical composition of the base steel sheet of the grain-oriented electrical steel sheet according to the embodiment may include the above-described elements (basic elements), with the remainder being Fe and impurities. However, the base steel sheet may further include one or more of Sn, Cu, Se, and Sb in the following ranges for the purpose of improving magnetic properties and the like. In addition, as elements other than these elements, for example, even when the base steel sheet includes any one or two or more selected from W, Nb, Ti, Ni, Co, V, Cr, and Mo in a total amount of 1.0% or less (whether they are added intentionally or included as impurities), the effect of the grain-oriented electrical steel sheet according to the embodiment is not impaired.

Here, the impurity is an element that is a contaminant derived from ore or scrap as a raw material, a manufacturing environment, or the like when the base steel sheet is industrially manufactured, and means an element that is allowed to be included in a content that does not adversely affect the effect of the grain-oriented electrical steel sheet according to the embodiment.

### Sn: 0 to 0.50%

Sn (tin) is an element that contributes to improvement in magnetic properties through primary recrystallization structure control. In order to obtain an effect of improving magnetic properties, the Sn content is preferably 0.01% or more. The Sn content is more preferably 0.02% or more, and still more preferably 0.03% or more.

On the other hand, when the Sn content exceeds 0.50%, secondary recrystallization is unstable, and magnetic properties are deteriorated. Therefore, the Sn content is preferably 0.50% or less. The Sn content is more preferably 0.30% or less, and still more preferably 0.10% or less.

### Cu: 0 to 0.50%

Copper (Cu) is an element that contributes to an increase in Goss orientation occupancy in a secondary recrystallization structure. In order to obtain the above effect, the Cu content is preferably 0.01% or more. The Cu content is more preferably 0.02% or more, and still more preferably 0.03% or more.

On the other hand, when the Cu content exceeds 0.50%, the steel sheet is embrittled during hot rolling. Therefore, in the base steel sheet of the grain-oriented electrical steel sheet according to the embodiment, the Cu content is preferably 0.50% or less. The Cu content is more preferably 0.30% or less, and still more preferably 0.10% or less.

### Se: 0 to 0.020%

Se (selenium) is an element having an effect of improving magnetic properties. When Se is included, the Se content is preferably 0.001% or more such that Se favorably exhibits the effect of improving magnetic properties. The Se content is more preferably 0.003% or more, and still more preferably 0.006% or more.

On the other hand, when the Se content exceeds 0.020%, coating adhesion is deteriorated. Therefore, the Se content is preferably 0.020% or less. The Se content is more preferably 0.015% or less, and still more preferably 0.010% or less.

### Sb: 0 to 0.50%

Sb (antimony) is an element having an effect of improving magnetic properties. When Sb is included, the Sb content is preferably 0.005% or more such that Sb favorably exhibits the effect of improving magnetic properties. The Sb content is more preferably 0.01% or more, and still more preferably 0.02% or more.

On the other hand, when the Sb content exceeds 0.50%, coating adhesion is significantly deteriorated. Therefore, the Sb content is preferably 0.50% or less. The Sb content is more preferably 0.30% or less, and still more preferably 0.10% or less.

As described above, in the grain-oriented electrical steel sheet 10 of the embodiment, the base steel sheet 1 includes, for example, as a chemical composition: the above-described basic elements, and a remainder of Fe and impurities; or the basic elements, one or more other optional elements, and a remainder of Fe and impurities.

The chemical composition of the base steel sheet 1 of the grain-oriented electrical steel sheet 10 according to the embodiment can be measured using a known ICP emission spectrometry. However, Si is determined by a method (Methods for determination of silicon content) defined in JIS G 1212-1997. Specifically, when the swarf is dissolved in an acid, silicon oxide is separated as a precipitate, and thus the precipitate (silicon oxide) is filtered with filter paper, and the mass is measured to determine the Si content.

The C content and the S content are determined by a well-known high frequency combustion method (combustion-infrared absorption method). Specifically, the solution is combusted by high-frequency heating in an oxygen stream, and generated carbon dioxide and sulfur dioxide are detected to determine the C content and the S content.

The N content is determined using a well-known inert gas fusion-thermal conductivity method.

Note that, at the time of measurement, in a case where the intermediate layer 2 and the insulating coating 3 are formed on the surface of the base steel sheet 1, the measurement is performed after peeling them off. As a peeling method, it is possible to peel them off by immersing the grain-oriented electrical steel sheet 10 in a high-concentration alkaline solution (for example, a 30% sodium hydroxide solution heated to 85°C) for 20 minutes or more. It is possible to visually determine whether or not they have been peeled off. In a case of a small sample, they may be peeled off by surface grinding.

In order to ensure the properties of the base steel sheet 1 of the grain-oriented electrical steel sheet 10, the base steel sheet 1 preferably has B8/Bs of 0.93 or more, which is an index of the {110}<001> orientation development degree. B8 is a magnetic flux density when a magnetic field of 800 A/m is applied, and Bs is a saturation magnetic flux density in the component system of the base steel sheet 1. B8/Bs is more preferably 0.95 or more.

### <Intermediate Layer>

The grain-oriented electrical steel sheet 10 of the embodiment has the intermediate layer 2 on the surface of the base steel sheet 1. As described above, the grain-oriented electrical steel sheet 10 of the embodiment has no forsterite film. Further, a SiO₂ layer as disclosed in Patent Documents 3 and 4 is not included. Therefore, the intermediate layer 2 is formed in direct contact with the base steel sheet 1.

The intermediate layer 2 is a layer (coating) having an average thickness of 20 to 200 nm, includes one or two or more selected from a group consisting of V, Mo, W, and Zr, and includes one or two or more selected from a group consisting of phosphorus; fluorine; and nitrogen and oxygen.

As described above, in general, a grain-oriented electrical steel sheet has a forsterite film generated in a final annealing step and a tension insulating coating formed thereon. However, in recent years, it has been clarified that the forsterite film hinders movement of a domain wall and adversely affects iron loss, and thus, in order to further improve magnetic properties, a grain-oriented electrical steel sheet having no forsterite film has been studied. However, when a forsterite film is not present, it is difficult to ensure sufficient coating adhesion between the insulating coating and the base steel sheet.

The grain-oriented electrical steel sheet 10 of the embodiment, having the intermediate layer 2 including one or two or more selected from a group consisting of V, Mo, W, and Zr between the base steel sheet 1 and the insulating coating 3, is improved in coating adhesion between the base steel sheet 1 and the insulating coating 3 via the intermediate layer 2.

The intermediate layer 2, including one or two or more selected from a group consisting of V, Mo, W, and Zr, can improve adhesion between the intermediate layer 2 and the insulating coating 3. In addition, as described later, when the intermediate layer 2 is formed by immersion in a chemical treatment solution, the intermediate layer 2 can be formed on the surface of the base steel sheet 1 through a chemical reaction, and adhesion between the intermediate layer 2 and the base steel sheet 1 can also be ensured.

In addition, since the intermediate layer 2 includes one or two or more selected from a group consisting of V, Mo, W, and Zr, coating adhesion between the base steel sheet 1 and the insulating coating 3 can be secured even when the average thickness is reduced to 200 nm or less. When the average thickness is 200 nm or less, the space factor can be increased when the grain-oriented electrical steel sheet 10 is applied to a laminated iron core. When the intermediate layer 2 does not include one or two or more selected from a group consisting of V, Mo, W, and Zr, the average thickness is required to increase to improve coating adhesion. As a result, when the grain-oriented electrical steel sheet is applied to a laminated iron core, the space factor cannot be increased. In order to further increase the space factor of the laminated iron core, the average thickness of the intermediate layer 2 is preferably 180 nm or less, 160 nm or less, or 150 nm or less.

When the average thickness of the intermediate layer 2 is less than 20 nm, the thickness of the intermediate layer is too thin to improve coating adhesion between the base steel sheet 1 and the insulating coating 3. Therefore, the average thickness of the intermediate layer 2 is 20 nm or more. From the viewpoint of further enhancing coating adhesion between the base steel sheet 1 and the insulating coating 3, the average thickness of the intermediate layer 2 is preferably 100 nm or more.

The method for identifying metal elements included in the intermediate layer 2 will be described.

A sample is collected from the grain-oriented electrical steel sheet 10 so that the sheet thickness cross section can be observed. The sheet thickness cross section is observed using a transmission-type electron microscope. When an electron image obtained using a transmission-type electron microscope is observed, it is possible to infer how many layers the cross-sectional structure includes in the sheet thickness cross section.

Next, in order to specify each layer in the cross-sectional structure, line analysis is performed for 5 lines along the sheet thickness direction by using TEM-EDS (energy dispersive X-ray spectroscopy), and quantitative analysis is performed for the chemical composition of each layer.

Each layer is specified from the observation result in the electron image and the quantitative analysis result of TEM-EDS.

When a region has an Fe content of 80 atom% or more on average and the line segment on the scanning line of the line analysis corresponding to the region (thickness) is 300 nm or more, the region is determined as the base steel sheet 1, and the region excluding the base steel sheet 1 is determined as the intermediate layer 2 and the insulating coating 3.

As to the region excluding the base steel sheet 1, the region in which the Fe content is less than 80 atom% on average, one or more of V, Mo, W, and Zr is 2 atom% or more on average, and the Si content is less than 50 atom% on average is determined as the intermediate layer 2.

As to the region excluding the base steel sheet 1, the region in which the Fe content is less than 80 atom% on average, the P content is less than 50 atom% on average, and the Si content is 20 atom% or more on average is determined as the insulating coating 3.

The average thickness of the intermediate layer 2 can be determined by calculating the average value of the thickness of the region determined as the intermediate layer 2.

In the intermediate layer 2, V, Mo, W, and Zr each are preferably included in the form of vanadic acid, vanadium oxide, molybdic acid, phosphomolybdic acid, molybdenum oxide, tungstic acid, phosphotungstic acid, tungsten oxide, zirconic acid, and zirconium oxide. That is, the intermediate layer 2 preferably includes one or two or more selected from a group consisting of vanadic acid, vanadium oxide, molybdic acid, phosphomolybdic acid, molybdenum oxide, tungstic acid, phosphotungstic acid, tungsten oxide, zirconic acid, and zirconium oxide.

The intermediate layer 2 includes one or two or more selected from a group consisting of phosphate, hydrofluoride, and nitrate. By including one or two or more thereof, the intermediate layer can be processed at a higher processing rate. Accordingly, the denseness of the intermediate layer can be improved.

In the analysis method described later, phosphate is detected as phosphorus, hydrofluoride is detected as fluorine, and nitrate is detected as nitrogen and oxygen. Since nitrogen detected in the intermediate layer of the embodiment is derived from nitrate, both nitrogen and oxygen are simultaneously detected by the analysis method described later. For example, when nitrogen in the intermediate layer is not derived from nitric acid but derived from a nitride bonded to a metal element, both nitrogen and oxygen are not simultaneously detected.

The intermediate layer 2 preferably includes one or two or more selected from a group consisting of Na, K, and Li. When one or two or more thereof is/are included, it is possible to prevent a decrease in corrosion resistance.

Through the method as described below, it is possible to determine whether or not the intermediate layer 2 includes vanadic acid, vanadium oxide, molybdic acid, phosphomolybdic acid, molybdenum oxide, tungstic acid, phosphotungstic acid, tungsten oxide, zirconic acid, and zirconium oxide.

A sample is collected from the grain-oriented electrical steel sheet 10, and the intermediate layer in the sheet thickness cross section is analyzed through XPS (X-ray photoelectron spectroscopy), thereby determining the chemical state of each element. As to vanadium, molybdenum, tungsten, and zirconium, the energy shift (chemical shift) of XPS is analyzed for each element, thereby determining whether or not each element is in an oxidized state. When vanadium is detected in an oxidized state, it is determined that the intermediate layer includes vanadic acid or vanadium oxide. When molybdenum is detected in an oxidized state, it is determined that the intermediate layer includes molybdic acid, phosphomolybdic acid, or molybdenum oxide. When tungsten is detected in an oxidized state, it is determined that the intermediate layer includes tungstic acid, phosphotungstic acid, and tungsten oxide. When zirconium is detected in an oxidized state, it is determined that the intermediate layer includes zirconic acid and zirconium oxide.

Note that measurement is performed for the intermediate layer determined from the observation result in the electron image and the quantitative analysis result of TEM-EDS.

Phosphorus of the phosphate, fluorine of the hydrofluoride, nitrogen and oxygen of the nitrate, Na, K, and Li can be specified by the above-described method using a transmission-type electron microscope and TEM-EDS.

### (Insulating Coating 3)

In the grain-oriented electrical steel sheet 10 of the embodiment, the insulating coating 3 is disposed on the surface of the intermediate layer 2.

The insulating coating 3 is not particularly limited as long as it is used as an insulating coating for a grain-oriented electrical steel sheet. From the viewpoint of adhesion to the intermediate layer 2 (coating adhesion to the base steel sheet 1 via the intermediate layer 2), silica is preferably included in an amount of 30 parts by mass or more with respect to 100 parts by mass of phosphate. The silica is derived from colloidal silica in a coating liquid. When the content of silica is too large, powderization is caused. Therefore, the silica is preferably included in an amount of 150 parts by mass or less with respect to 100 parts by mass of phosphate.

The insulating coating 3 preferably includes a phosphate and silica in a total amount of 70 mass% or more. As the remainder other than the phosphate and silica, ceramic fine particles such as alumina and silicon nitride may be included.

The average thickness of the insulating coating 3 is not particularly limited, but is preferably 2.0 to 10.0 µm. When the average thickness of the insulating coating 3 is 2.0 µm or more, a sufficient coating tension can be obtained. In addition, an increase in elution of phosphoric acid can be suppressed, and an excellent elution property can be obtained. In addition, stickiness and a decrease in corrosion resistance can be suppressed, and the coating can be prevented from peeling. In addition, when the average thickness of the insulating coating 3 is 10.0 µm or less, reduction in space factor can be suppressed when the grain-oriented electrical steel sheet 10 is applied to a laminated iron core, and deterioration in magnetic properties, reduction in coating adhesion due to cracking or the like, and reduction in corrosion resistance can be prevented.

The average thickness of the insulating coating 3 may be measured by the same method as in the intermediate layer 2.

### <Manufacturing Method>

According to a manufacturing method satisfying the manufacturing conditions described below, the grain-oriented electrical steel sheet 10 of the embodiment can be suitably manufactured. Note that, as a matter of course, the grain-oriented electrical steel sheet 10 of the embodiment is not particularly limited in its manufacturing method. That is, the grain-oriented electrical steel sheet 10 having the above-described configuration is regarded as the grain-oriented electrical steel sheet 10 of the embodiment regardless of manufacturing conditions therefor.

The grain-oriented electrical steel sheet 10 of the embodiment can be manufactured by a manufacturing method including:
(I) a hot rolling step of hot-rolling a steel piece having a predetermined chemical composition to obtain a hot band;
(II) a hot-band annealing step of annealing the hot band;
(III) a cold rolling step of cold-rolling the hot band after the hot-band annealing step to obtain a steel sheet (cold band);
(IV) a decarburization annealing step of performing decarburization annealing on the steel sheet after the cold rolling step;
(V) a final annealing step of applying an annealing separator containing 10 to 100 mass% of Al₂O₃ to the steel sheet after the decarburization annealing step, drying the steel sheet, and then performing final annealing;
(VI) an annealing separator removing step of removing an excess of the annealing separator from the steel sheet after the final annealing step;
(VII) an immersion step of immersing the steel sheet after the annealing separator removing step in a chemical treatment solution having a liquid temperature of 30°C to 60°C, and including one or two or more metal elements selected from a group consisting of V, Mo, W, and Zr, the metal element included in a concentration of 0.01 to 2.00 atom%, for 5 to 90 seconds;
(VIII) a drying step of pulling up the steel sheet after the immersion step from the chemical treatment solution, removing an excess of the chemical treatment solution, and then drying the steel sheet; and
(IX) an insulating coating forming step of applying, to the steel sheet after the drying step, a coating liquid containing a phosphate and colloidal silica such that the colloidal silica is contained in an amount of 30 to 150 parts by mass with respect to 100 parts by mass of the phosphate, drying the steel sheet, and then holding the steel sheet at a sheet temperature of 750°C to 900°C for 10 to 50 seconds.

In addition, the manufacturing method of the grain-oriented electrical steel sheet 10 of the embodiment may further include one or both of
(X) a nitriding treatment step of subjecting the steel sheet to a nitriding treatment between the decarburization annealing step and the final annealing step, and
(XI) a magnetic domain refinement step of performing magnetic domain control of the steel sheet after the insulating coating layer forming step.

The manufacturing method of the grain-oriented electrical steel sheet of the embodiment may further include, between the annealing separator removing step and the immersion step,
(XII) a surface adjusting step of controlling reactivity of the surface of the steel sheet.

Among these steps, (V) final annealing step to (IX) insulating coating forming step mainly related to formation of the intermediate layer 2 and the insulating coating 3 are characteristic in the manufacture of the grain-oriented electrical steel sheet 10 according to the embodiment, and known conditions can be adopted for other steps or conditions not described.

Hereinafter, these steps will be described.

### <Hot Rolling Step>

In the hot rolling step, a steel piece having a predetermined chemical composition, such as a slab is heated and then hot-rolled to obtain a hot band. The heating temperature of the steel piece is preferably in a range of 1100°C to 1450°C. The heating temperature is more preferably 1300°C to 1400°C.

The chemical composition of the steel piece is changed according to the chemical composition of the grain-oriented electrical steel sheet 10 to be finally obtained, but, for example, the chemical composition includes, in terms of mass%, 0.01 to 0.20% of C, 2.50 to 4.00% of Si, 0.01 to 0.040% of sol. Al, 0.01 to 0.50% of Mn, 0.020% or less of N, 0.005 to 0.040% of S, 0 to 0.50% of Cu, 0 to 0.50% of Sn, 0 to 0.020% of Se, 0 to 0.50% of Sb, and a remainder of Fe and impurities.

The hot rolling conditions are not particularly limited, and is appropriately set on the basis of required properties. The sheet thickness of the hot band is preferably, for example, 2.0 to 3.0 mm.

### <Hot-Band Annealing Step>

The hot-band annealing step is a step of annealing the hot band manufactured through the hot rolling step. By performing such an annealing treatment, recrystallization occurs in the metallographic structure, and favorable magnetic properties can be preferably achieved.

When hot band annealing is performed, the hot band manufactured through the hot rolling step is annealed according to a known method. The means for heating the hot band at the time of annealing is not particularly limited, and a known heating method can be adopted. The annealing conditions are not particularly limited. For example, the hot band can be annealed in a temperature range of 900°C to 1200°C for 10 seconds to 5 minutes.

### <Cold Rolling Step>

In the cold rolling step, the hot band after the hot-band annealing step is subjected to cold rolling to obtain a steel sheet (cold band). The cold rolling may be performed one time (continuously performed without intervening intermediate annealing(s)). Alternatively, before the final pass in the cold rolling step, intermediate annealing may be performed at least one time or two or more times by interrupting cold rolling, that is, cold rolling may be performed several times with intervening intermediate annealing(s).

When the intermediate annealing is performed, it is preferable to hold the hot band at a temperature of 1000°C to 1200°C for 5 to 180 seconds. The annealing atmosphere is not particularly limited. The number of times of intermediate annealing is preferably 3 or less in consideration of manufacturing cost.

In addition, before the cold rolling step, the surface of the hot band may be subjected to pickling.

In the cold rolling step according to the embodiment, the hot band after the hot-band annealing step is cold-rolled according to a known method to form a steel sheet. For example, the cumulative rolling reduction can be in a range of 80 to 95%. When the cumulative rolling reduction is 80% or more, a Goss nucleus in which the { 110 }<001> orientation has a high development degree in a rolling direction can be preferably obtained. On the other hand, when the cumulative rolling reduction exceeds 95%, there is a high possibility that secondary recrystallization is unstable in the subsequent final annealing step, which is not preferable.

### <Decarburization Annealing Step>

In the decarburization annealing step, the obtained steel sheet is subjected to decarburization annealing. In the decarburization annealing, the decarburization annealing conditions are not limited as long as the steel sheet is primarily-recrystallized and C, which adversely affects magnetic properties, is removed from the steel sheet. Examples of the decarburization annealing conditions include holding at an annealing temperature of 800°C to 900°C for 10 to 600 seconds with an oxidation degree (PH₂O/PH₂) in the annealing atmosphere (furnace atmosphere) of 0.3 to 0.6.

### <Nitriding Treatment Step>

A nitriding treatment may be performed between the decarburization annealing step and the final annealing step described later.

In the nitriding treatment step, for example, the steel sheet after the decarburization annealing step is maintained at about 700°C to 850°C in a nitriding treatment atmosphere (atmosphere containing a gas having nitriding ability, such as hydrogen, nitrogen, or ammonia) to perform the nitriding treatment. When AlN is utilized as an inhibitor, the N content of the steel sheet after the nitriding treatment step is preferably 40 ppm or more by the nitriding treatment.

On the other hand, when the N content of the steel sheet after the nitriding treatment step exceeds 1000 ppm, AlN is excessively present in the steel sheet even after completion of secondary recrystallization in the final annealing. Such AlN causes iron loss deterioration. Therefore, the N content of the steel sheet after the nitriding treatment step is preferably 1000 ppm or less.

### <Final Annealing Step>

In the final annealing step, an annealing separator containing 10 to 100 mass% of Al₂O₃ is applied to the steel sheet that is after the decarburization annealing step or has been further subjected to the nitriding treatment (after the nitriding treatment step), and dried, and then final annealing is performed.

In a conventional manufacturing method of a grain-oriented electrical steel sheet, a forsterite film is formed on the surface of a steel sheet (cold band) by applying an annealing separator mainly containing MgO and performing final annealing. On the other hand, in the manufacturing method of the grain-oriented electrical steel sheet 10 of the embodiment, an annealing separator containing Al₂O₃ is used not to form a forsterite film.

On the other hand, the percentage of Al₂O₃ may be 100 mass%, but, in the manufacturing method of the grain-oriented electrical steel sheet 10 of the embodiment, the annealing separator preferably contains MgO from a viewpoint of preventing the sheet surface from being baked with Al₂O₃. MgO may be 0%, but the percentage of MgO is preferably 5 mass% or more to obtain the above effect. When MgO is contained, the percentage of MgO is 90 mass% or less in order to ensure 10 mass% or more of Al₂O₃. The percentage of MgO is preferably 50 mass% or less.

In addition, in the manufacturing method of the grain-oriented electrical steel sheet 10 of the embodiment, the annealing separator may further contain a chloride. When the annealing separator contains a chloride, an effect that a forsterite film is more hardly formed can be obtained. The content of the chloride is not particularly limited, and may be 0%, but is preferably 0.5 to 10 mass% when the above effect is obtained. As the chloride, for example, bismuth chloride, calcium chloride, cobalt chloride, iron chloride, and nickel chloride are effective.

Final annealing conditions are not limited, but for example, a condition of holding the steel sheet in a temperature range of 1150°C to 1250°C for 10 to 60 hours can be adopted.

### <Annealing Separator Removing Step>

An excess of the annealing separator is removed from the steel sheet after the final annealing step. For example, the excess of the annealing separator can be removed by performing water washing.

### <Surface Adjusting Step>

The surface adjusting step of controlling the reactivity of the surface of the steel sheet may be performed between the annealing separator removing step and the immersion step.

Although conditions of the surface adjusting step are not limited, a condition of immersing the steel sheet after the annealing separator removing step in a commercially available surface conditioner for 30 seconds to one minute can be exemplified.

### <Immersion Step>

### <Drying Step>

The steel sheet after the annealing separator removing step (or as necessary, after the surface adjusting step) is immersed in a chemical treatment solution having a liquid temperature of 30°C to 60°C, and including one or two or more metal elements selected from a group consisting of V, Mo, W, and Zr, the metal element included in a concentration of 0.01 to 2.00 atom%, for 5 to 90 seconds (immersion step). Thereafter, the steel sheet is pulled up from the chemical treatment solution, an excess of the chemical treatment solution is removed, and then the steel sheet is dried (drying step). As a result, the intermediate layer 2 is formed on the surface of the steel sheet (base steel sheet).

When the liquid temperature is lower than 30°C or the immersion time is shorter than 5 seconds, the intermediate layer 2 having a sufficient average thickness cannot be formed. On the other hand, when the liquid temperature exceeds 60°C or the immersion time exceeds 90 seconds, the average thickness of the intermediate layer 2 becomes too thick. The immersion time is more preferably 30 to 60 seconds.

In addition, when the concentration of the metal element in the chemical treatment solution is less than 0.01 atom%, the intermediate layer 2 is slowly formed, and become industrially costly. When the thickness of the intermediate layer 2 is made uniform, the concentration of the metal element is preferably 0.10 atom% or more.

Here, the concentration of the metal element is the concentration of one or two or more selected from a group consisting of V, Mo, W, and Zr in the chemical treatment solution in terms of atom%.

On the other hand, when the concentration of the metal element is more than 2.00 atom%, crystal grains may be coarsened to result in reduced coating adhesion. Each of V, Mo, W, and Zr contained in the chemical treatment solution may be vanadic acid, vanadium oxide, molybdic acid, phosphomolybdic acid, molybdenum oxide, tungstic acid, phosphotungstic acid, tungsten oxide, zirconic acid, and zirconium oxide.

The pH of the chemical treatment solution is preferably adjusted according to the metal element contained in the chemical treatment solution. When the metal element contained in the chemical treatment solution is V, the pH is preferably adjusted to 1 to 7. When the metal element is Mo, the pH is preferably adjusted to 4 to 9. When the metal element is W, the pH is preferably adjusted to 1 to 4. When the metal element is Zr, the pH is preferably adjusted to 1 to 6.

The pH can be adjusted by using a buffer.

The chemical treatment solution contains one or more of phosphate, hydrofluoride, and nitrate. As other compounds, one or more of an ammonium salt and sodium may be contained.

The chemical treatment solution may contain, for example, one or more of ethanolamine, 1-amino-2-propanol, ethylenediamine, and ammonium dihydrogen phosphate as an additive. These additives have a low boiling point and disappear after the insulating coating is formed, and therefore are not detected as a component in the intermediate layer and the insulating coating of the grain-oriented electrical steel sheet.

When the temperature at the time of drying is high, voids may be generated to deteriorate coating adhesion, and therefore the temperature at the time of drying is preferably 300°C or lower. The temperature at the time of drying is more preferably 200°C or lower. The temperature at the time of drying is preferably 100°C or higher.

### <Insulating Coating Forming Step>

In the insulating coating forming step, a coating liquid containing a metal phosphate and colloidal silica is applied to the steel sheet after the drying step (the steel sheet in which the intermediate layer is formed on the base steel sheet), and dried, and then the steel sheet is held at a sheet temperature of 750°C to 900°C for 10 to 50 seconds to form the insulating coating 3.

When the sheet temperature at the time of holding is lower than 750°C, the tension becomes low and the magnetic properties of the grain-oriented electrical steel sheet 10 is deteriorated. Therefore, the sheet temperature is preferably 750°C or higher. On the other hand, when the sheet temperature is higher than 900°C, rigidity of the base steel sheet 1 decreases and the steel sheet is easily deformed. In this case, the base steel sheet 1 may be distorted due to transfer or the like, thereby deteriorating the magnetic properties of the grain-oriented electrical steel sheet 10. Therefore, the sheet temperature is preferably 900°C or lower.

When the holding time is shorter than 10 seconds, elution property of the grain-oriented electrical steel sheet 10 is poor. Therefore, the holding time is 10 seconds or longer. On the other hand, when the holding time is longer than 50 seconds, productivity is poor. Therefore, the holding time is 50 seconds or shorter.

The coating liquid contains a phosphate and colloidal silica such that the colloidal silica is contained in an amount of 30 to 150 parts by mass with respect to 100 parts by mass of the phosphate. As the phosphate, for example, one or a mixture of two or more selected from aluminum phosphate, zinc phosphate, magnesium phosphate, nickel phosphate, copper phosphate, lithium phosphate, and cobalt phosphate can be used.

The coating liquid may contain V, W, Mo, Zr, and the like as additional elements. When these elements are contained, they can be added to the coating liquid, for example, as an oxygen acid.

As the colloidal silica, S-type or C-type colloidal silica can be used. The S-type colloidal silica means colloidal silica in which the silica solution is alkaline, and the C-type colloidal silica means colloidal silica in which the silica particle surface is subjected to an aluminum treatment, and the silica solution is alkaline to neutral. The S-type colloidal silica is widely and generally used, and is relatively inexpensive in price, but it is necessary to be careful because the S-type colloidal silica may aggregate and precipitate when being mixed with an acidic metal phosphate solution. The C-type colloidal silica is stable even when being mixed with a metal phosphate solution, and there is no possibility of precipitation, but the C-type colloidal silica is relatively expensive because the number of treatment steps is large. It is preferable to select and use them according to the stability of a coating liquid to be prepared.

### <Magnetic Domain Refinement Step>

The manufacturing method of the grain-oriented electrical steel sheet 10 according to the embodiment may further include a magnetic domain refinement step of performing magnetic domain refinement on the steel sheet after the insulating coating forming step.

By performing the magnetic domain refinement treatment, iron loss of the grain-oriented electrical steel sheet 10 can be further reduced.

The method of the magnetic domain refinement treatment include: a method for narrowing the width of a 180° magnetic domain (performing refinement of a 180° magnetic domain) by forming linear or dotted groove parts extending in a direction intersecting a rolling direction at predetermined intervals in the rolling direction; and a method for narrowing the width of a 180° magnetic domain (performing refinement of a 180° magnetic domain) by forming linear or dotted stress-strain parts or groove parts extending in a direction intersecting a rolling direction at predetermined intervals in the rolling direction.

In a case where a stress-strain part is formed, laser beam irradiation, electron beam irradiation, and the like can be applied. In a case where a groove part is formed, a mechanical groove forming method using a gear or the like, a chemical groove forming method for forming a groove by electrolytic etching, a thermal groove forming method by laser irradiation, and the like can be applied.

In a case where the insulating coating is damaged due to formation of a stress-strain part or a groove part and properties such as insulation properties are deteriorated, the insulating coating may be formed again to repair the damage.

### Examples

Hereinafter, the effects of an embodiment of the present invention will be more specifically described with reference to examples, but the conditions in examples are one condition example adopted to confirm the feasibility and effects of the present invention, and the present invention is not limited to this one condition example. The present invention may adopt various conditions as long as an object of the present invention is achieved without departing from the gist of the present invention.

A slab including, in terms of mass%, C: 0.08%, Si: 3.31%, sol. Al: 0.028%, N: 0.008%, Mn: 0.07%, S: less than 0.0005%, and a remainder of Fe and impurities was cast.

This slab was heated to 1350°C and then hot-rolled to form a hot band having a sheet thickness of 2.2 mm.

This hot band was subjected to hot-band annealing at 1100°C for 10 seconds, and then cold-rolled until the sheet thickness became 0.22 mm to obtain a steel sheet (cold band).

This steel sheet was subjected to decarburization annealing at 830°C for 90 seconds in an atmosphere with (PH₂O/PH₂) of 0.4.

Thereafter, an annealing separator containing 48 mass% of Al₂O₃, 48 mass% of MgO, and 4 mass% of bismuth chloride was applied to the steel sheet, and dried, and then final annealing was performed at 1200°C for 20 hours.

When the steel sheet after the final annealing step was washed with water to remove an excess of the annealing separator, no forsterite film was formed on the sheet surface.

This steel sheet was immersed in the treatment liquid shown in Table 1 under the conditions (immersion time) shown in Table 2, and then heated to 100°C to 150°C and dried to form an intermediate layer. The liquid temperature of the treatment liquid was 30°C to 60°C.

In Table 2, EA, IPA, EN, and AHP are as follows. The pH of the chemical treatment solution was adjusted to 1 to 7 when the metal element contained in the chemical treatment solution was V, adjusted to 4 to 9 when the metal element was Mo, adjusted to 1 to 4 when the metal element was W, and adjusted to 1 to 6 when the metal element was Zr.
EA: Ethanolamine
IPA: 1-amino-2-propanol
EN: Ethylenediamine
AHP: Ammonium dihydrogen phosphate

The steel sheet on which the intermediate layer was formed was cut into a plurality of pieces as necessary, the coating liquid containing phosphoric acid and colloidal silica shown in Table 2 was applied to each steel sheet, and the steel sheet was baked in a drying furnace for the time shown in Table 2 at the sheet temperature shown in Table 2, thereby forming an insulating coating on the surface. Some of the coating liquids contained alumina or silicon nitride as the remainder.

As the phosphate in the coating liquid, aluminum phosphate containing 100 mass% of Al, and aluminum phosphate and magnesium phosphate containing 75 mass% of Al and 25 mass% of Mg were used.

By the above-described method, a grain-oriented electrical steel sheet was manufactured.

The obtained grain-oriented electrical steel sheet was subjected to measurement of the average thickness of the intermediate layer and the insulating coating and analysis of the chemical composition by the methods described above.

In addition, as a result of examining the chemical composition of the base steel sheet, the base steel sheet includes Si: 3.31%, C: 0.001%, sol. Al: less than 0.001%, N: 0.001%, Mn: 0.07%, S: less than 0.0005%, and a remainder of Fe and impurities.

In the cross-sectional observation in Examples 1 to 8, the base steel sheet, the intermediate layer, and the insulating coating were confirmed, and in the intermediate layer, the metal element included in each treatment liquid was confirmed in an oxidized state. In addition, phosphorus was detected in the intermediate layer in the example in which phosphate was contained in the treatment liquid. Fluorine was detected in the intermediate layer in the example in which hydrogen fluoride was contained. Both nitrogen and oxygen were detected in the intermediate layer in the example in which nitrate was contained. Na was detected in the intermediate layer in the example in which Na was contained. K was detected in the intermediate layer in the example in which K was contained. Li was detected in the intermediate layer in the example in which Li was contained.

The average thickness of the insulating coating was 2.0 to 10.0 µm.

For each of these grain-oriented electrical steel sheets, coating adhesion, coating tension, corrosion resistance, elution property, space factor, and magnetic properties were determined by the methods described later. The results thereof are shown in Table 3.

### [Coating Adhesion]

For coating adhesion, a sample having a width of 30 mm and a length of 300 mm was collected from the grain-oriented electrical steel sheet, and the sample was subjected to stress relief annealing at 800°C for 2 hours in a nitrogen stream. Thereafter, the sample was subjected to a bending and adhering test in which the sample was wound and unwound around a 10 mmφ cylinder, and then the insulating coating was evaluated for peeling degree.

The evaluation criteria were as follows. Those evaluated as 3 or more were determined as pass, meaning excellent coating adhesion. On the other hand, those evaluated as less than 3 were determined as fail, meaning poor coating adhesion.
5: No peeling was observed.
4: Almost no peeling was observed.
3: Several mm of peeling was observed.
2: 1/3 to 1/2 of peeling was observed.
1: Almost entire peeling was observed.

### [Coating Tension]

Coating tension was calculated by collecting a sample from the grain-oriented electrical steel sheet and counting backward from the bending state when an insulating coating on one surface of the sample was peeled off.

When the obtained coating tension was 4.0 MPa or more, those were determined as pass, meaning excellent coating tension. On the other hand, when the obtained coating tension was less than 4.0 MPa, those were determined as fail, meaning poor coating tension.

### [Corrosion Resistance]

In accordance with Methods of salt spray testing, JIS Z2371:2015, a 5%NaCl aqueous solution was naturally dropped to a sample for 7 hours in an atmosphere of 35°C. Thereafter, the rusting area was evaluated in terms of 10 points.

Evaluation criteria were as follows. Those having a score of 5 or more (5 to 10) were determined as pass, meaning excellent corrosion resistance. On the other hand, those having a score of less than 5 (1 to 4) were determined as fail, meaning poor corrosion resistance.
10: No rust was generated.
9: Rust was generated in an extremely small amount (area fraction was 0.1% or less).
8: Rust was generated in an area fraction of more than 0.10% and 0.25% or less.
7: Rust was generated in an area fraction of more than 0.25% and 0.50% or less.
6: Rust was generated in an area fraction of more than 0.50% and 1.0% or less.
5: Rust was generated in an area fraction of more than 1.0% and 2.5% or less.
4: Rust was generated in an area fraction of more than 2.5% and 5.0% or less.
3: Rust was generated in an area fraction of more than 5.0% and 10% or less.
2: Rust was generated in an area fraction of more than 10% and 25% or less.
1: Rust was generated in an area fraction of more than 25% and 50% or less.

### [Elution Property]

A sample was collected from the obtained grain-oriented electrical steel sheet, the sample was boiled in boiled pure water for 10 minutes, and the amount of phosphoric acid eluted in the pure water was measured. By dividing the amount of the eluted phosphoric acid by the area of the insulating coating of the boiled grain-oriented electrical steel sheet, the elution property (mg/m²) was evaluated.

Measurement of the amount of phosphoric acid eluted in the pure water was calculated by cooling the pure water (solution) in which phosphoric acid was eluted, diluting the cooled solution with pure water, and measuring the phosphoric acid concentration of the sample by ICP-AES.

When the elution amount per unit area was less than 40 mg/m², those were determined as pass, meaning excellent elution property. On the other hand, when the elution amount per unit area was 40 mg/m² or more, those were determined as fail, meaning poor elution property.

### [Space Factor]

The space factor was measured by a method in accordance with JIS C 2550-5:2020. Thirty pieces having a width of 30 mm and a length of 320 mm were collected from the grain-oriented electrical steel sheet, and used as test pieces. The samples were measured for the total mass, and then pressurized at 1.00 MPa, where the space between the upper and lower cover plates sandwiching the laminate was measured to calculate space factor.

When the space factor was 95.0% or more, those were determined as pass, meaning that the laminated iron core formed can be improved in space factor. On the other hand, when the space factor was less than 95.0%, those were determined as fail, meaning that the laminated iron core formed cannot be improved in space factor.

### [Magnetic Properties]

As magnetic properties, iron loss W17/50 and magnetic flux density B8 were measured. For the iron loss W17/50, five samples were collected from the grain-oriented electrical steel sheet, and the samples were excited to 1.7 T at 50 Hz, and the average value of the obtained iron loss was measured. For the magnetic flux density B8, five samples were collected from the grain-oriented electrical steel sheet, and the samples were applied with magnetic field of 800 A/m at 50 Hz, and the average value of the obtained magnetic flux density was measured. The magnetic properties thereof were measured in accordance with the method of testing magnetic properties of a single sheet (single sheet tester: SST) specified in JIS C 2556: 2015.

When the iron loss W17/50 was 0.70 W/kg or less and the magnetic flux density B8 was 1.90 T or more, those were determined as pass, meaning excellent magnetic properties. When at least one of them was not satisfied, those were determined as fail, meaning poor magnetic properties.

**[Table 1]**

| Treatment liquid | Metal element | Compound | Compound concentration (wt%) | Other contained compound |
|---|---|---|---|---|
| A | Vanadium | Sodium vanadate | 0.5 | Nitrate, hydrofluoride, and ammonium salt |
| B | Molybdenum | Sodium molybdate | 0.8 | Sulfate and ammonium salt |
| C | Tungsten | Sodium tungstate | 1.2 | Sulfate, sodium, and phosphate |
| D | Zirconium | Hexafluorozirconic acid | 0.03 | Nitrate, hydrofluoride, and ammonium salt |
| E | Zirconium | Hexafluorozirconic acid | Zr: 0.02 | Phosphate, hydrofluoride, nitrate, and sodium |
| | Vanadium | Ammonium vanadate | V: 0.05 | |
| F | Zinc | Zinc phosphate | 5 | Nitrate, phosphate, and hydrofluoride |
| G | Calcium | Calcium phosphate | 6 | Nitrate and phosphate |
| H | Iron | Iron phosphate | 5 | Nitrate and phosphate |
| I | Hafnium | Hafnium oxide | 0.15 | Nitrate, hydrofluoride, and ammonium salt |
| J | Indium | Indium oxide | 0.005 | Nitrate, hydrofluoride, and ammonium salt |

**[Table 2]**

| | Chemical treatment | | Other additives | | Metal element concentration | Phosphate | Fraction of silica in colloidal silica with respect to 100 parts by mass of phosphate | Treatment conditions | | Intermediate layer |
|---|---|---|---|---|---|---|---|---|---|---|
| | Treatment liquid | Immersion time (s) | Type | Ratio | (at%) | Type: Ratio (mass%) | Part by mass | Temperature (°C) | Time (second) | Average thickness (nm) |
| Example 1 | A | 30 | EA | 0.3 wt% | 0.30 | Al: 100 | 50 | 850 | 30 | 100 |
| Example 2 | A | 90 | Li | 0.002 wt% | 0.65 | Al: 75, Mg: 25 | 45 | 850 | 45 | 110 |
| Example 3 | B | 30 | IPA | 0.5 wt% | 0.57 | Al: 100 | 40 | 870 | 30 | 130 |
| Example 4 | B | 60 | AHP | 0.2 wt% | 0.59 | Al: 75, Mg: 25 | 35 | 880 | 50 | 160 |
| Example 5 | C | 60 | EN | 0.3 wt% | 0.86 | Al: 100 | 50 | 880 | 45 | 110 |
| Example 6 | C | 90 | AHP | 0.2 wt% | 0.87 | Al: 100 | 40 | 820 | 10 | 80 |
| Example 7 | D | 30 | EN | 0.2 wt% | 0.02 | Al: 100 | 55 | 850 | 30 | 30 |
| Example 8 | E | 90 | K | 0.001 wt% | 0.02 | Al: 100 | 50 | 820 | 30 | 40 |
| Comparative Example 1 | F | 30 | | | 2.04 | Al: 100 | 40 | 850 | 90 | 3100 |
| Comparative Example 2 | H | 60 | | | 2.23 | Al: 100 | 45 | 820 | 60 | 4500 |
| Comparative Example 3 | I | 30 | | | 4.24 | Al: 75, Mg: 25 | 40 | 870 | 50 | 1500 |
| Comparative Example 4 | J | 600 | | | 0.12 | Al: 100 | 40 | 760 | 15 | 80 |
| Comparative Example 5 | F | 3 | | | 0.00 | Al: 100 | 40 | 760 | 15 | 70 |
| Comparative Example 6 | - | - | | | - | Al: 100 | 55 | 850 | 30 | - |

| | | | | | | | | | | |
|---|---|---|---|---|---|---|---|---|---|---|
| Underlines indicate that the item is out of the scope of the present invention. | | | | | | | | | | |

**[Table 3]**

| | Insulating coating properties | | | | | Magnetic properties | |
|---|---|---|---|---|---|---|---|
| | Adhesion | Elution property (mg/m²) | Corrosion resistance | Coating tension (MPa) | Space factor (%) | B8 (T) | W 17/50 (W/kg) |
| Example 1 | 4 | 14 | 9 | 7.8 | 97.9 | 1.93 | 0.66 |
| Example 2 | 3 | 18 | 8 | 8.7 | 97.6 | 1.94 | 0.61 |
| Example 3 | 4 | 16 | 9 | 8.1 | 97.8 | 1.93 | 0.64 |
| Example 4 | 3 | 20 | 8 | 7.2 | 97.8 | 1.94 | 0.63 |
| Example 5 | 4 | 17 | 7 | 7.4 | 97.6 | 1.92 | 0.69 |
| Example 6 | 4 | 21 | 6 | 6.8 | 97.6 | 1.91 | 0.68 |
| Example 7 | 3 | 22 | 6 | 6.4 | 98.1 | 1.92 | 0.66 |
| Example 8 | 3 | 27 | 6 | 6.1 | 98.1 | 1.91 | 0.70 |
| Comparative Example 1 | 3 | 36 | 3 | 3.8 | 95.6. | 1.91 | 0.76 |
| Comparative Example 2 | 2 | 21 | 6 | 4.4 | 94.2 | 1.92 | 0.75 |
| Comparative Example 3 | 3 | 36 | 7 | 3.5 | 96.9 | 1.91 | 0.73 |
| Comparative Example 4 | 2 | 22 | 6 | 4.3 | 97.6 | 1.92 | 0.72 |
| Comparative Example 5 | 2 | 54 | 6 | 5.2 | 97.6 | 1.93 | 0.72 |
| Comparative Example 6 | 1 | 75 | 2 | 1.2 | 97.8 | 1.93 | 0.81 |

| | | | | | | | |
|---|---|---|---|---|---|---|---|
| Underlines indicate that the property is unpreferable. | | | | | | | |

As shown in Tables 1 to 3, it is found that the grain-oriented electrical steel sheet of the present invention examples is excellent in coating adhesion, coating tension, elution property, corrosion resistance, and magnetic properties, and can be improved in space factor when a laminated iron core is formed. On the other hand, it is found that the grain-oriented electrical steel sheet of comparative examples is poor in any one or more of the properties.

### INDUSTRIAL APPLICABILITY

According to the embodiments of the present invention, it is possible to provide a grain-oriented electrical steel sheet that has no forsterite film, is excellent in coating adhesion, coating tension, elution property, corrosion resistance, and magnetic properties, and can be increased in space factor when a laminated iron core is formed.

In addition, according to the above embodiments of the present invention, it is possible to provide a method for forming the intermediate layer and the insulating coating included in the grain-oriented electrical steel sheet.

### REFERENCE SIGNS LIST

1 Base steel sheet
2 Intermediate layer
3 Insulating coating
10 Grain-oriented electrical steel sheet

## Claims

1. A grain-oriented electrical steel sheet comprising:
a base steel sheet;
an intermediate layer disposed on a surface of the base steel sheet; and
an insulating coating disposed on a surface of the intermediate layer,
wherein the intermediate layer has an average thickness of 20 to 200 nm, includes one or two or more selected from a group consisting of V, Mo, W, and Zr, and includes one or two or more selected from a group consisting of phosphorus, fluorine, and nitrogen and oxygen.

2. The grain-oriented electrical steel sheet according to Claim 1,
wherein the intermediate layer includes one or two or more selected from a group consisting of vanadic acid, vanadium oxide, molybdic acid, phosphomolybdic acid, molybdenum oxide, tungstic acid, phosphotungstic acid, tungsten oxide, zirconic acid, and zirconium oxide.

3. The grain-oriented electrical steel sheet according to Claim 1 or 2,
wherein the intermediate layer includes one or two or more selected from a group consisting of Na, K, and Li.

4. A method for forming the intermediate layer and the insulating coating included in the grain-oriented electrical steel sheet according to Claim 1, the method comprising:
a final annealing step of applying an annealing separator containing 10 to 100 mass% of Al₂O₃ to a steel sheet, drying the steel sheet, and then performing final annealing;
an annealing separator removing step of removing an excess of the annealing separator from the steel sheet after the final annealing step;
an immersion step of immersing the steel sheet after the annealing separator removing step in a chemical treatment solution having a liquid temperature of 30°C to 60°C, and including one or two or more metal elements selected from a group consisting of V, Mo, W, and Zr, the metal element included in a concentration of 0.01 to 2.00 atom%, for 5 to 90 seconds;
a drying step of pulling up the steel sheet after the immersion step from the chemical treatment solution, removing an excess of the chemical treatment solution, and then drying the steel sheet; and
an insulating coating forming step of applying, to the steel sheet after the drying step, a coating liquid containing a phosphate and colloidal silica such that the colloidal silica is contained in an amount of 30 to 150 parts by mass with respect to 100 parts by mass of the phosphate, drying the steel sheet, and then holding the steel sheet at a sheet temperature of 750°C to 900°C for 10 to 50 seconds.
